# EUROPÄISCHE PATENTSCHRIFT

(11) **EP 2 164 810 B1**
(45) Veröffentlichungstag und Bekanntmachung des Hinweises auf die Patenterteilung: **18.05.2011**
(21) Anmeldenummer: 08760799.0
(22) Anmeldetag: 10.06.2008
(51) Int. Cl.: C02F 3/12, C02F 3/20

(54) **VERFAHREN ZUM ZUFÜHREN VON SAUERSTOFF IN EIN PROZESSBECKEN EINER BIOLOGISCHEN KLÄRANLAGE**
METHOD OF INTRODUCING OXYGEN INTO A PROCESS TANK DURING BIOLOGICAL TREATMENT
PROCÉDÉ D'INTRODUCTION D'OXYGÈNE DANS UNE CUVE DE TRAITEMENT DURANT UNE ÉPURATION BIOLOGIQUE

(30) Priorität: 02.07.2007 DE 102007030668; 03.07.2007 DE 102007030918
(43) Veröffentlichungstag der Anmeldung: 24.03.2010
(73) Patentinhaber: Boller, Reinhard, 57234 Wilnsdorf (DE)
(72) Erfinder: Boller, Reinhard, 57234 Wilnsdorf (DE)
(74) Vertreter: Haverkamp, Jens
(86) Internationale Anmeldenummer: PCT/EP2008/057240
(87) Internationale Veröffentlichungsnummer: WO 2009/003800

(56) Entgegenhaltungen:
- DE-A1- 10 144 082
- DE-A1-102006 059 198
- JP-A- 2 194 897
- JP-A- 10 085 773
- JP-A- 56 045 796
- JP-A- 57 001 490
- JP-A- 57 102 290
- JP-A- 63 275 948
- KOHNE M: "KONTINUIERLICHE ON-LINE-MESSVERFAHREN IN DER ABWASSERTECHNIK" 1. Oktober 1993 (1993-10-01), KORRESPONDENZ ABWASSER, ABWASSERTECHNISCHE VEREINIGUNG, ST. AUGUSTIN, DE, PAGE(S) 1628 - 1630,1632 , XP000395080 ISSN: 0341-1540 Seite 1632, Absatz 4; Abbildung 9

## Beschreibung

Gegenstand der Erfindung ist ein Verfahren zum Zuführen von Sauerstoff in ein Belebtschlamm enthaltendes Prozessbecken einer biologisch arbeitenden Kleinkläranlage während eines Belüftungsvorganges.

Um dezentral Abwässer reinigen (klären) zu können, sind Kleinkläranlagen entwickelt worden. Viele dieser Kleinkläranlagen arbeiten im Unterschied zu herkömmlichen kontinuierlich arbeitenden Kläranlagen sequenziell. Die Reaktoren, in denen die Wasserreinigung bei sequentiell arbeitenden Kläranlagen stattfindet, werden daher auch als SBR-Reaktoren (Sequencing Batch Reactor) bezeichnet. Bei diesem Reinigungsverfahren werden die in konventionellen Kläranlagen in unterschiedlichen, nacheinander geschalteten Becken durchgeführten Reinigungsprozesse in einem Becken oder einer Kammer eines Behälters durchgeführt. Derartige SBR-Anlagen verfügen zumeist über zwei Becken beziehungsweise Behandlungsstufen, die, zumeist als Kammern ausgebildet, in einem gemeinsamen Behälter angeordnet sind. Bei größeren Anlagen werden auch separate Behälter für die einzelnen Behandlungsstufen eingesetzt. Die im Rahmen dieser Ausführungen benutzten Begriffe "Becken" und "Kammer" bezeichnen Behältnisse oder Teile davon, in denen die Reinigungsprozesse durchgeführt werden. Bei einer SBR-Anlage übernimmt ein erstes Becken typischerweise die mechanische Vorreinigung durch Absetzenlassen gröberer und schwerer Feststoffe sowie auch zumeist der Speicherung der abgesetzten Stoffe im Schlammspeicher. Gleichfalls dient dieses Vorklärbecken zur Pufferung der zugeführten Abwassermenge. Abgetrennt von diesem Vorklärbecken dient die zweite Kammer einer solchen SBR-Anlage als eigentlicher Prozess- oder Reaktorbehälter. Von dem Vorklärbecken wird in definierten zeitlichen Intervallen vorgeklärtes Abwasser in das Prozessbecken eingepumpt, in dem die eigentliche Abwasserreinigung unter Verwendung von Belebtschlamm erfolgt. Die eigentliche Abwasserreinigung erfolgt unter Verwendung biologischer Mittel, typischerweise unter Verwendung von Belebtschlamm. Da die Reinigung des Abwassers mit dem Belebtschlamm in dem Prozessbecken durchgeführt wird, erfolgt in diesem Becken auch eine Trennung von Belebtschlamm und gereinigtem Abwasser, damit letzteres aus dem Prozessbecken nach seiner Reinigung abgepumpt werden kann. Typischerweise wird der Reinigungsprozess zeitgetaktet gesteuert, was auch in variablen Zeitfenstern erfolgen kann. Dieses bedeutet, dass die einzelnen Reinigungsschritte gemäß einem vorgegebenen Zeitschema nacheinander durchgeführt werden. Als wesentliche, in dem Prozessbecken einer SBR-Anlage durchgeführte Prozessphasen können folgende genannt werden, wobei diese in ihrer Abfolge und ihrer Häufigkeit variieren können:
- Füllphase zum Einbringen des zu reinigenden Abwassers in das Prozessbecken,
- Belüftungsphase zum Zuführen von Sauerstoff in das Prozessbecken und gleichzeitiges Vermischen von Abwasser und Belebtschlamm,
- Absetzphase zum Abtrennen des Belebtschlammes vom gereinigten Abwasser durch Sedimentation,
- Klarwasser-Abzugsphase zum Abpumpen des von dem Belebtschlamm getrennten gereinigten Abwassers als Klarwasser und
- Überschussschlamm-Abzugsphase zum Abziehen des Überschussschlammes aus dem Prozessbecken.

Biologische Reinigungsverfahren unterliegen hinsichtlich ihrer Wirkung unterschiedlichen Einflüssen und unterscheiden sich daher von statisch ablaufenden Verfahren. Als dynamische Faktoren, die Einfluss auf den Betrieb einer SBR-Anlage haben, sind vor allem die Abwassermenge und deren Beschaffenheit, der Sauerstoffgehalt im Prozessbecken, die Aktivität des Belebtschlammes, dessen Alter sowie Umweltfaktoren, wie Temperatur etc. zu nennen.

Zum Durchführen des eigentlichen Reinigungsprozesses wird in der Belüftungsphase Sauerstoff in das Prozessbecken eingebracht. Dabei ist es zweckmäßig, sowohl für den Abbau der organischen Abwasserinhaltsstoffe als auch für die Nitrifikation ausreichend Sauerstoff einzutragen und gleichzeitig dafür zu sorgen, dass für einen funktionalen Denitrifikationsprozess der Sauerstoffgehalt sehr niedrig ist bzw. 0 mg/l beträgt. Nur bei Abwesenheit von Sauerstoff im Abwasser kann der Denitrifikationsprozess gezielt ablaufen, da nur dann im Abwasser die Bakterien aus dem Nitrat den Sauerstoff entnehmen und damit für die erforderliche Stickstoffelimination sorgen, wobei der verbleibende Stickstoff gasförmig in die Atmosphäre entweicht. Zum Erfassen des Sauerstoffgehaltes im Prozessbecken wird in der in DE 40 24 947 A1 offenbarten Kläranlage ein Sauerstoffsensor im Prozessbecken eingesetzt. Dieser misst den in der Flüssigkeit des Prozessbeckens enthaltenen Sauerstoff. Aus dem erfassten Sauerstoffgehalt kann einerseits der Sauerstoffbedarf und bei wiederholten Messungen andererseits der Sauerstoffverbrauch oder während einer Belüftungsphase die Sauerstoffzufuhr überwacht werden. Auch die aus DE 43 32 815 A1 bekannt gewordene Kläranlage sowie das darin beschriebene Verfahren arbeiten unter Verwendung eines Sauerstoffsensors, der im Prozessbecken angeordnet ist. Ein Einsatz von Sauerstoffsensoren zur Bestimmung der Sauerstoffzufuhr in das Prozessbecken ist jedoch nicht für alle Kläranlagen geeignet. Während der Einsatz eines Sauerstoffsensors bei solchen Kläranlagen für den vorgenannten Zweck geeignet ist, die von Personal betrieben und regelmäßig überwacht sowie gewartet werden, ist der Einsatz eines Sauerstoffsensors bei Kläranlagen ungeeignet, die zumeist von Privatpersonen betrieben und pro Jahr nur wenige Male gewartet werden, wie dieses typischerweise bei Kleinkläranlagen und kleinen Kläranlagen der Fall ist. Zahlreiche dieser Kleinkläranlagen und kleinen Kläranlagen arbeiten nach dem SBR-Verfahren. Sauerstoffsensoren müssen zur Bewahrung ihrer Funktionsfähigkeit in regelmäßigen Abständen gereinigt und oftmals neu kalibriert werden. Weiterhin müssen Elektrolyte oder Membranen oder sonstige Teile gewechselt werden. Überdies sind gerade die Kosten eines Sauerstoffsensors bezogen auf die vergleichsweise geringeren Kosten einer Kleinkläranlage verhältnismäßig hoch.

JP 56 045796 A offenbart eine Kläranlage mit Belüftungsbecken, einem Steuersystem, Kompressoren sowie mit einem Drucksensor in der Leitung von der Drucksteuerung zu der Luftzufuhr. Dieses Dokument lehrt, dass der Druck der Zufuhr gemessen und die Luftmenge reguliert wird, um eine bestimmte Luftmenge in die Becken zu schicken. Dabei werden Kontrollsignale von der Drucksteuerung zu den Verdichtern gesendet. Auch wird das Volumen der zugeführten Luftmenge geregelt.

Bei dem aus diesem Dokument bekannten Verfahren wird die dem Becken zugeführte Luftmenge und damit die Sauerstoffmenge während des För derns erfasst, um eine Aussage darüber treffen zu können, welche Luft- bzw. Sauerstoffmenge in das Becken eingebracht ist.

Aus dem Artikel "wie viel Luft braucht eine Kläranlage?" aus: Kläranlagennewspaper, Ausgabe 03/2006, Seiten 1 bis 3, erhältlich über httpJ/www.kläranlagen-vergleich.de/wordpress/2006/03/06newsletter-aus gabe-032006 ist bekannt, zur Berechnung der zugeführten Luftmenge, die in ein Belüftungsbecken einer Kläranlage eingebracht werden soll, ebenfalls die Leistungskurve des Verdichters zu berücksichtigen.

Ausgehend von diesem diskutierten Stand der Technik liegt der Erfindung daher die Aufgabe zugrunde, ein eingangs genanntes Verfahren dergestalt weiterzubilden, dass sich dieses insbesondere für einen Einsatz in nur mit einem geringeren Wartungsaufwand arbeitenden Kläranlagen, insbesondere Kleinkläranlagen oder kleine Kläranlagen eignet, bei dem nicht notwendigerweise ein Sauerstoffsensor benötigt wird und bei dem die quantitative Sauerstoffzufuhr verbessert ist.

Gelöst wird diese Aufgabe durch ein eingangs genanntes, gattungsgemäßes Verfahren mit den Merkmalen des Anspruchs 1.

Bei diesem Verfahren erfolgt die Ermittlung der in einem Prozessbecken eingebrachten Sauerstoffmenge im Unterschied zu vorbekannte Verfahren ohne eine direkte Erfassung des Sauerstoffgehaltes in der in dem Prozessbecken befindlichen Flüssigkeit, sondern mittelbar durch Bestimmen des durch den Verdichter geförderten und damit in das Prozessbecken eingebrachten Luftvolumens. Hierdurch kann in einfacher Weise und ohne Notwendigkeit der Anordnung eines im Prozessbecken befindlichen Sensors mit hinreichender Genauigkeit die jeweils zugeführte Sauerstoffmenge bestimmt werden. Hierzu wird auf die diesbezüglich bekannten Zusammenhänge zurückgegriffen, in welche bekannten Faktoren auch standortspezifische Faktoren, wie beispielsweise die geografische Höhe des Standortes der Kläranlage oder dergleichen einfließen können.

Zweckmäßigerweise wird das geförderte Luftvolumen in einer Belüftungsphase mittels einer bei laufendem Verdichter durchgeführten Druckmessung in der Luftleitung vorgenommen. Es hat sich überraschend gezeigt, dass mit einer solchen Druckmessung ein hinreichend genauer Luftfördervolumenwert bereitgestellt werden kann, und zwar zeitbezogen auf eine bestimmte Laufzeit des Verdichters. Als Korrekturgröße wird die förderdruckabhängige Leistungskurve des Verdichters berücksichtigt. Gerade bei Kleinkläranlagen und kleinen Kläranlagen werden typischer Weise Verdichter eingesetzt, die eine vom Förderdruck abhängige Leistungskurve besitzen. Bei einer Änderung des Betriebsdruckes, den der Verdichter aufbauen muss, um Luft in das Prozessbecken einzutragen, ändert sich entsprechend auch die geförderte Luftmenge. Bei steigendem Betriebsdruck der Verdichters reduziert sich auf Grund seiner Leistungskurve die geförderte Luftmenge. Sodann kann nach Erfassen eines Druckwertes während einer Belüftungsphase die aktuell geförderte Luftmenge und daraus wiederum die aktuell in das Prozessbecken eingebrachte Sauerstoffmenge bestimmt werden. Das Erfassen der aktuell in das Prozessbecken eingebrachten Sauerstoffmenge auf diesem Wege ist hinsichtlich der eingesetzten Sensorik, die sich außerhalb des Prozessbeckens befindet, wartungsfrei. Da eine Kläranlage, bei der dieses Verfahren typischer Weise eingesetzt wird, oftmals bereits mit einem in die Luftleitung eingeschalteten Drucksensor ausgerüstet ist oder dieser ohne Weiteres nachrüstbar ist, kann das Verfahren auf einfache Weise realisiert werden. Dieses macht deutlich, dass das Verfahren ohne Weiteres in bestehende Kläranlagen der genannten Art nachgerüstet werden. Hierzu ist lediglich erforderlich, die zum Steuern der Anlage eingesetzte Programmierung anzupassen bzw. zu ändern.

Bei herkömmlichen Anlagen der in Rede stehenden Art wird der Drucksensor allein zur Leckageüberwachung, wie in DE 198 38 488 A1 beschrieben, oder zur Füllstandshöhenbestimmung des Prozessbeckens, wie aus DE 203 20 908 U1 bekannt, eingesetzt.

Das vorbeschriebene Verfahren ist Teil eines Verfahrens zum Regeln der Sauerstoffzufuhr in das Belebtschlamm enthaltene Prozessbecken, zu welchem Verfahren ebenfalls eine Ermittlung des Sauerstoffbedarfs innerhalb des Prozessbeckens zu zählen ist. Dieses Verfahren ist zweckmäßigerweise wiederum Teil des Verfahrens zum Steuern bzw. Regeln der Prozessabläufe einer solchen Kläranlage, insbesondere an einer nach dem SBR-Verfahren arbeitenden Kläranlage. Um eine hinreichend genaue Angabe über die im Prozessbecken benötigte Sauerstoffmenge zu erhalten, ohne hierfür notwendigerweise einen im Prozessbecken angeordneten Sauerstoffsensor einsetzen zu müssen, wird gemäß einer bevorzugten Ausgestaltung der Sauerstoffbedarf aus der aktuellen Füllstandshöhe im Prozessbecken abgeleitet. Auch hierbei hat sich überraschend gezeigt, dass über eine Füllstandshöhenerfassung der Sauerstoffbedarf hinreichend genau ermittelt werden kann. Erforderlich ist es hierzu, die aktuelle Füllstandshöhe absolut zu erfassen. Es hat sich gezeigt, dass das der Kläranlage zugeführte Rohwasser in relativ engen Grenzen immer denselben Verschmutzungsgrad aufweist. Ein Grund hierfür ist, dass die Personen, deren Abwasser einer Kleinkläranlage oder kleinen Kläranlage zugeführt wird, ihre Gewohnheiten hinsichtlich Abwassermenge und Abwasserzusammensetzung - dem Vermutzungsgrad - meist nicht in erheblichem Maße und nicht in kurzen Abständen ändern. Es stellt sich somit ein bestimmtes Verhältnis von Abwassermenge zur Verschmutzung ein, so dass über die Füllstandshöhenerfassung die zugeführte Wassermenge hinreichend genau und damit die zu reinigende Verschmutzung (Schmutzfracht) bestimmt werden kann. An dieser Stelle können beispielsweise regionale Belastungsunterschiede ebenso wie das Verhalten der angeschlossenen Einwohner zum Beispiel über einen Anpassungs- oder Korrekturfaktor in der Steuerung berücksichtigt werden, so dass ein hinreichend genaues Regelverhältnis zwischen der gemessenen Abwassermenge und den zur reinigenden Inhaltsstoffen entsteht. In Abhängigkeit von dem Verschmutzungsgrad ist für die unterschiedlichen Prozesse die jeweils benötigte Sauerstoffmenge berechenbar. Folglich können diese Größen als bekannte Größen in die Bedarfsbestimmung einfließen. Da zudem die Querschnittsfläche des Prozessbeckens bekannt ist und nach Durchführen einer Füllstandshöhenmessung ebenfalls die Füllstandshöhe, kann ohne Weiteres das in dem Prozessbecken enthaltene Flüssigkeitsvolumen berechnet werden. Daher kann auch diese Größe als bekannte Größe in die Sauerstoffbedarfsbestimmung eingehen. Ist nach einer Füllstandshöhenbestimmung der in dem Prozessbecken benötigte Sauerstoffbedarf ermittelt worden, wird die sich an eine solche Sauerstoffbedarfsbestimmung anschließende Belüftungsphase entsprechend gesteuert. Da typischerweise der Verdichter einer solchen Kläranlage mit konstanter Antriebsleistung betrieben wird, ist nach einer ersten kurzen Anlaufzeit des Verdichters, bis sich innerhalb der Luftleitung die Strömungsverhältnisse stabilisiert haben, aus einer dann vorgenommenen Druckmessung zum Bestimmen des Fördervolumens ermittelbar, wie lange diese Belüftungsphase zum Zuführen der gewünschten Sauerstoffmenge betrieben werden muss. Dieses erfolgt bereits zu Beginn einer Belüftungsphase. Es ist daher bereits zu Beginn einer solchen Belüftungsphase bei konstant bleibenden Bedingungen im Prozessbecken bekannt, wie lange diese laufen wird. Dieses macht deutlich, dass im Unterschied zu herkömmlichen Verfahren bei der beschriebenen Sauerstoffmengenzufuhrermittlung die Länge der Belüftungsphasen bereits am Anfang einer jeden Phase bekannt ist. Dieses kann für weitere Prozesse bzw. zur Vorbereitung derselben genutzt werden. Bei vorbekannten Verfahren ist dieses nicht möglich, da das Ende einer Belüftungsphase erst dann feststeht, wenn durch den Sauerstoffsensor im Prozessbecken der gewünschte Sauerstoffgehalt im Prozessbecken gemessen worden ist.

Die absolute Füllstandshöhenermittlung erfolgt gemäß einer bevorzugten Ausgestaltung ebenfalls mittels dem ohnehin in die Luftleitung eingeschalteten Drucksensor. Gemessen wird mit diesem der in der Luftleitung herrschende Luftdruck im Anschluss an eine Luftförderperiode, und zwar vorzugsweise unmittelbar im Anschluss an eine solche Luftförderperiode, bevor der in der Luftleitung herrschende Druck typischerweise aufgrund von Undichtigkeiten innerhalb des Verdichters über Maßen abgesunken ist. In einer vorzugsweisen Ausgestaltung des Verfahrens kann auch nach der oder den Füllphasen der Verdichter kurz nach Beginn einer Belüftungsphase für einen kurzen Zeitraum abgeschaltet werden, um eine Höhenstandsmessung bei abgeschaltetem Verdichter durchführen zu können. Damit kann bereits die erste Belüftungsphase exakt geregelt werden, da nach Durchführung dieser Messung alle erforderlichen Messergebnisse zur Berechnung vorliegen. Zum Durchführen der Druckmessung wird der sich in der Luftleitung nach Beenden der Luftförderperiode einstellende Druck für die Zeitdauer der Messung aufrechterhalten, welches beispielsweise durch Absperren der Luftleitung zum Verhindern eines Luftrückflusses aus der Luftleitung erfolgt. Der dann in der Luftleitung herrschende Druck entspricht dem durch die Wassersäule in dem Becken in der Luftleitung aufgebauten Druck. Durch die füllstandsabhängige Wassersäule in dem Becken ist die darin befindliche Flüssigkeit bestrebt, über die Mündung der Luftleitung in die Luftleitung einzudringen und die darin befindliche Luft entgegen ihrer ursprünglichen Förderrichtung aus dieser herauszudrücken. Dieses kann durch Absperren der Luftleitung zwischen dem Verdichter und dem Drucksensor unterbunden werden. Dann entspricht dieser sich in der Luftleitung einstellende Luftdruck dem durch die Wassersäule gebildeten hydrostatischen Druck. Ein solcher Luftrückfluss kann auch durch ein dem Verdichter zugeordnetes Aggregat oder durch den Verdichter selbst realisiert sein. Der erhaltene Messwert korreliert unmittelbar mit dem durch die Wassersäule ausgeübten hydrostatischen Druck. Folglich kann aus dem ermittelten Druckmesswert ohne Weiteres und ohne besondere Korrekturmaßnahmen die Füllstandshöhe ermittelt werden. Dieses Verfahren erlaubt in hinreichender Genauigkeit eine absolute Füllstandshöhenerfassung der in dem Prozessbecken befindlichen Flüssigkeit.

Möglich ist eine hinreichend genaue Druckmessung zum Ermitteln der absoluten Füllstandshöhe auch, wenn aus der Luftleitung mit einer bestimmten Leckrate Luft entweicht. Da es sich bei dieser Leckrate um eine Konstante handelt ist der erhaltene Messwert ohne großen Aufwand korrigierbar. Im Zuge einer Kalibrierung des Messverfahrens kann eine solche Leckrate bestimmt werden. Ein solches Kalibrieren kann auch während des Betriebs der Kläranlage in wiederholten Abständen erfolgen, um sich unter Umständen einstellende Messbedingungsänderungen zu erkennen und kompensieren zu können. Eine solche Leckrate kann system- bzw. leitungsbedingt oder auch bewusst vorgesehen sein. Beim bewussten Vorsehen ist Sorge dafür getragen, dass sich nach einer Beendigung des Luftförderbetriebes durch die Luftleitung der darin enthaltene Druck nicht sofort abbaut, sondern dass ein solcher Druckabbau oder Luftrückfluss gedrosselt erfolgt, damit durch den sich auch in diesem Fall innerhalb der Luftleitung im Anschluss an eine Luftförderperiode einstellenden Druck die gewünschte Füllstandshöhenerfassung vorgenommen werden kann.

Nachfolgend ist die Erfindung anhand eines Ausführungsbeispiels unter Bezugnahme auf die beigefügten Figuren beschrieben. Es zeigen:
- **Fig. 1**:: in einer schematisierten Schnittdarstellung eine Kleinkläranlage, arbeitend nach dem SBR-Verfahren und
- **Fig. 2**:: ein Diagramm darstellend den Druckverlauf innerhalb einer Luftlei- tung der Kleinkläranlage der Figur 1 über die Zeit im Anschluss an eine Luftförderperiode.

Eine Kleinkläranlage 1 verfügt über einen Behälter 2 mit einer oberseitigen Öffnung, in die ein Deckel 3 eingelegt ist. Der Behälter 2 der Kleinkläranlage 1 ist in zwei Kammern unterteilt und verfügt zu diesem Zweck über eine Trennwand 4. Durch die Trennwand 4 ist ein erstes Becken bzw. eine erste Kammer geschaffen, die als Schlammspeicher und Puffer sowie einer Vorklärung dient und die in diesen Ausführungen als Vorklärbecken 5 bezeichnet ist. Bei dem anderen Becken bzw. bei der anderen Kammer handelt es sich um ein Prozessbecken 6. Die Kleinkläranlage 1 arbeitet nach dem SBR-Verfahren. Daher kann das Prozessbecken 6 auch als SBR-Becken oder SBR-Reaktor angesprochen werden. In das Vorklärbecken 5 mündet ein Zulauf 7, durch den das zu klärende Rohwasser - das Abwasser - der Kleinkläranlage 1 zugeführt wird. Aus dem Vorklärbecken 5 wird das vorgeklärte Abwasser mit einem Druckluftheber 8 in das Prozessbecken 6 gefördert.

In dem Prozessbecken 6, in dem die für ein SBR-Verfahren typischen Prozessschritte sukzessive durchgeführt werden, fördert ein Druckluftheber 9 nach der biologischen Reinigung das gereinigte Abwasser (Klarwasser) in einen Vorlagebehälter 10. Von diesem wird das Klarwasser einem Ablauf 11 zugeführt. Mittels einer als Druckluftheber konzipierten Abzugspumpe 12 wird der überschüssige Schlamm des Prozessbeckens 6 anschließend abgezogen und in den Schlammspeicher des Vorklärbeckens 5 gefördert.

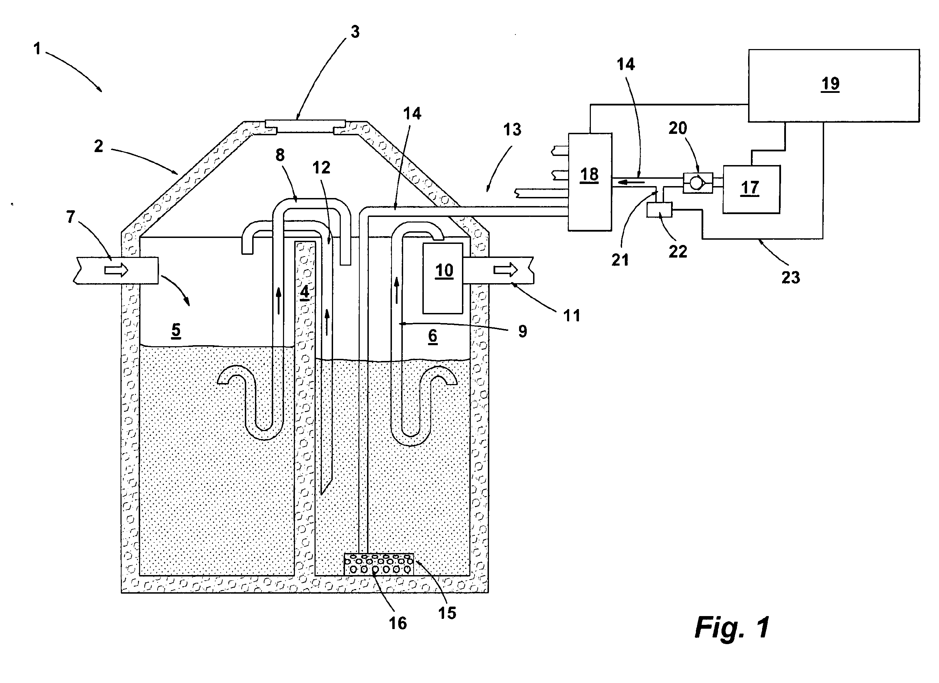

Bei dem dargestellten Ausführungsbeispiel ist in das Prozessbecken 6 eine Belüftungseinrichtung 13 eingebaut. Die Belüftungseinrichtung 13 umfasst einen an eine Luftleitung 14 angeschlossenen Belüfterkopf 15 mit einer Belüftermembran 16, über den die durch die Luftleitung 14 zugeführte Luft in das Prozessbecken 6 bzw. die darin befindliche Flüssigkeit abgegeben wird. Der Belüfterkopf 15 ist im Bereich des Bodens des Prozessbeckens 6 angeordnet. Die zugeführte Luft tritt aus die Belüftermembran 16 sehr feinblasig aus. Die in der Belüftermembran 16 in Figur 1 dargestellten Öffnungen dienen lediglich der schematisierten Darstellung des Vorhandenseins von Öffnungen. Aufgrund der Feinporigkeit der Belüftermembran 16 sind diese tatsächlich kaum zu erkennen. Ziel der Belüftungseinrichtung 13 ist, dem in dem Prozessbecken 6 bei dem dargestellten Ausführungsbeispiel enthaltenen Belebtschlamm Sauerstoff zuzuführen. Daher wird bevorzugt, dass die zugeführte Luft sehr feinblasig aus der Belüftermembran 16 austritt.

Die Luftleitung 14 wird beaufschlagt von einem Verdichter 17. Die Luftleitung 14 erstreckt sich somit von dem Verdichter 17 bis zu dem Belüfterkopf 15. Die von dem Verdichter 17 bei einem Betrieb geförderte Luft wird durch einen Druckluftverteiler 18 geführt, der mehrere Abgänge aufweist. Jeder der Abgänge ist innerhalb des Druckluftverteilers 18 mittels eines, bei dem dargestellten Ausführungsbeispiel als Magnetventil ausgebildeten Ventils (in Figur 1 nicht dargestellt) öffnenbar und verschließbar. Zum Steuern der Luftzufuhr sind der Verdichter 17 und die dem Druckluftverteiler 18 zugehörigen Magnetventile an eine Steuereinrichtung 19 angeschlossen. An einen der Abgänge des Druckluftverteilers 18 ist die für die Belüftung des Prozessbeckens 6 vorgesehene Luftleitung 14 angeschlossen. Dem Abgang der Luftleitung 14 dem Verdichter 17 nachgeschaltet ist in die Luftleitung 14 ein in Förderrichtung öffnendes und in der Gegenrichtung schließendes Rückschlagventil 20 eingeschaltet. In Strömungsrichtung der von dem Verdichter 17 geförderten Luft ist dem Rückschlagventil 20 ein in die Luftleitung 14 mündendes Messrohr 21 eines Drucksensors 22 nachgeschaltet. Aufgrund der Verbindung zwischen dem Messrohr 21 mit der Luftleitung 14 kann bei geöffneten Magnetventil durch den Drucksensor 22 der in der Luftleitung 14 herrschende Luftdruck gemessen werden. Der Drucksensor 22 ist über eine Signalleitung 23 an die Steuereinrichtung 19 angeschlossen. In einer alternativen Ausgestaltung ist der Drucksensor in die Luftleitung 14, dem Druckluftverteiler 18 nachgeschaltet, angeordnet.

Die Kleinkläranlage 1 arbeitet, worauf bereits zuvor hingewiesen worden ist, nach dem SBR-Verfahren. Die Steuerung der einzelnen Prozessschritte erfolgt über die Steuereinrichtung 19. Als Stellgröße zum Steuern einzelner Prozessschritte wird auch der über den Drucksensor 22 ermittelte Druck in der Luftleitung 14 verwendet. Mittels des Drucksensors 22 erfolgt eine Füllstandshöhenerfassung in dem Prozessbecken 6. Die Füllstandshöhenerfassung wird durchgeführt, wenn durch die Luftleitung 14 keine Luft dem Prozessbecken 6 zugeführt wird. Dieses ist der Fall, wenn beispielsweise das dem Abgang des Druckluftverteilers 18, an dem die Luftleitung 14 angeschlossen ist, zugeordnete Magnetventil geöffnet ist und der Verdichter 17 nicht arbeitet. Die Druckmessung selbst erfolgt nach Abschluss einer Luftförderperiode, also nach Beendigung einer Zeitspanne, in der durch die Luftleitung 14 Luft in das Prozessbecken 6 eingebracht worden ist. Bei einer solchen Luftförderperiode kann es sich um eine solche handeln, die ohnehin im Zuge einer Beckenbelüftung als Prozessschritt (Belüftungsphase) durchgeführt worden ist. Gleichfalls kann es sich bei einer solchen Luftförderperiode auch um ein kurzzeitiges Einbringen von Luft in das Prozessbecken 6 handeln, letztendlich allein mit dem Zweck, die nachstehend beschriebene Füllstandshöhenerfassung vornehmen zu wollen. Die Belüftermembran 16 verhindert in der Regel das Eindringen von Wasser in die Luftleitung 14 durch kleine Öffnungsweite der Poren in der Belüftermembran 16. Somit ist Voraussetzung für die Durchführung der Druckmessung zur Füllstandshöhenerfassung, dass vor dem Messzeitpunkt in der Luftleitung ein solcher Druck aufgebaut wird, dass durch die Belüftermembran 16 Luft in das Prozessbecken 6 bzw. die darin befindliche Flüssigkeit eingebracht wird.

Nach Beenden einer solchen Luftförderperiode ist die in dem Prozessbecken 6 enthaltene Flüssigkeit aufgrund des Prinzips der kommunizierenden Röhren grundsätzlich bestrebt, in die Luftleitung 14 einzudringen. Dieses wäre der Fall, wenn das freie Ende der Luftleitung 14 nicht durch eine Belüftermembran verschlossen wäre. In einem solchen Fall kann die in der Luftleitung 14 enthaltene Luft aufgrund des bei einem Luftrückfluss sperrenden Rückschlagventils 20 nicht entweichen. Folglich wird die innerhalb der Luftleitung 14 befindliche Luft entsprechend der Wassersäule der Flüssigkeit in dem Prozessbecken 6 komprimiert, wodurch sich innerhalb der Luftleitung 14 ein Druck einstellt, der dem hydrostatischen Druck der Wassersäule bezogen auf die Mündung der Luftleitung 14 in das Prozessbecken 6 entspricht. Dieser Druck ist nicht zeitgleich mit der Beendigung der Luftförderung eingestellt. Aus diesem Grunde ist es zweckmäßig, den Druck in der Luftleitung 14 über den Drucksensor 22 in einem vordefinierten zeitlichen Abstand nach Beenden der Luftförderung durchzuführen.

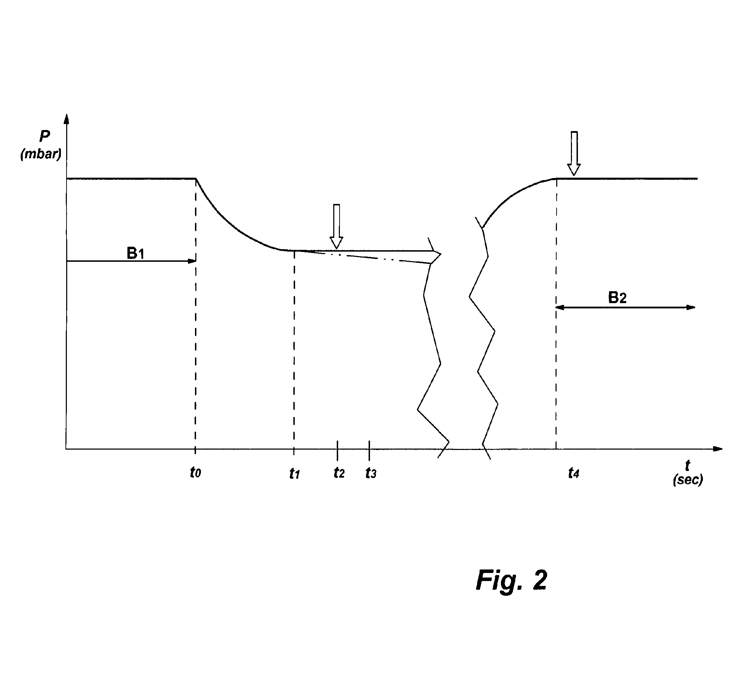

Figur 2 zeigt schematisiert die sich innerhalb der Luftleitung 14 einstellende Druckänderung, die sich nach einem Beenden einer Luftförderperiode als erste Belüftungsphase B₁ bei der Belüftungseinrichtung 13 innerhalb seiner Luftleitung 14 einstellt. Während einer Belüftungsperiode ist die Luftleitung 14 durch den Betrieb des Verdichters 17 luftbeaufschlagt. Der in der Luftleitung 14 erfassbare Druck ist höher als der allein durch die Wassersäule entgegenwirkende hydrostatische Druck. Zusätzlich zu dem durch die Wassersäule bereitgestellten Gegendruck ist in dem bei einem Betrieb des Verdichters 17 in der Luftleitung 14 erfassten Druck auch derjenige enthalten, der zum Öffnen der Belüftermembran 16 benötigt wird sowie derjenige, der zum Überwinden der Strömungswiderstände (Reibungsverluste beim Durchströmen der Leitungen, Turbulenzen in einem Magnetventil, Widerstände in Leitungsbögen etc.) bereitgestellt werden muss. Ein die Summe dieser Drücke übersteigender Förderdruck ist erforderlich, damit die geförderte Luft aus der Luftleitung 14 bzw. dem Belüfterkopf 15 mit seiner Belüftermembran 16 austreten kann. Die in Figur 2 am linken Rand des Diagramms noch laufende Belüftungsphase B₁ wird im Zeitpunkt to beendet, und zwar durch Abschalten des Verdichters 17. Nach Beenden der Luftförderperiode in der Luftleitung 14 zum Zeitpunkt t₀ sinkt der in der Luftleitung 14 befindliche Druck bei Abschalten des Verdichters 17 um den anteiligen Druck Strömungswiderstände etc. Der Druck, der nach Abschalten des Verdichters 17 noch über dem Druck zur Überwindung der Wassersäule sowie des Öffnungsdruckes der Belüftermembran 16 liegt, entweicht über die Belüftermembrane 16 in das Abwasser bis sich ein Druckgleichgewicht zwischen demjenigen in der Luftleitung 14 und der Summe von dem hydrostatischen Druck der Wassersäule im Prozessbecken und des Membranöffnungsdruckes eingestellt hat. Daher tritt auch nach Beenden einer Belüftungsperiode (hier: der Belüftungsphase B₁) in einem zeitlichen Nachlauf noch Luft aus der Luftleitung 14 in das Prozessbecken 6 bzw. die darin befindliche Flüssigkeit ein. Von dem Förderdruck, der im Zeitpunkt des Beendens einer Luftförderperiode innerhalb der Luftleitung 14 herrscht, fällt dieser auf ein Maß ab, der bei dem dargestellten Ausführungsbeispiel der Summe aus dem an der Mündung der Luftleitung 14 herrschenden hydrostatischen Druck und dem Öffnungsdruck der Belüftermembrane 16 entspricht. Es stellt sich mithin ein Druckgleichgewicht ein, da ein Luftrückfluss durch das geschlossene Rückschlagventil 20 verhindert ist. Dieser bei einer luftdichten Belüftungseinrichtung stabile Druckgleichgewichtszustand ist in Figur 2 im Zeitpunkt t₁ erreicht. Dieser Zeitpunkt wird abgewartet, bevor die der Füllstandshöhenermittlung dienende Druckmessung mit dem Drucksensor 22 durchgeführt wird. Die Druckmessung mit dem Drucksensor 22 erfolgt also nach dem Zeitpunkt t₁, beispielsweise im Zeitpunkt t₂, wie durch den Blockpfeil angedeutet. Der von dem Drucksensor 22 generierte Messwert wird über die Signalleitung 23 an die Steuereinrichtung 19 übertragen, die aus dem gemessenen Druckwert den Füllstand des Prozessbeckens 6 berechnet. Da bei dem dargestellten Ausführungsbeispiel in dem Druckmesswert der Öffnungsdruck der Belüftermembran 16 enthalten ist, wird der durch den Drucksensor erhaltene Messwert um diese bekannte Größe korrigiert.

In Figur 2 ist strichpunktiert beginnend im Zeitpunkt t₁ eine kontinuierliche Druckabnahme gezeigt, die sich bei einer konstanten Leckrate einstellen würde. Ist die Leckrate bekannt, kann die sich demzufolge einstellende fortschreitende Druckreduzierung, wie vorbeschrieben, zum Ermitteln der Füllstandshöhe über das Durchführen und Auswerten mehrerer Messungen korrigiert werden.

Durch einen Vergleich zweier oder mehrerer Füllstandsmessergebnisse kann eine Änderung des Flüssigkeitsfüllstandes im Prozessbecken 6 ermittelt werden.

Der durchschnittliche Belastungsgrad des in das Vorklärbecken eingebrachten Rohwassers ist bekannt oder kann in einer beispielhaften Ausgestaltung des Verfahrens über einen Korrekturfaktor angepasst werden. Demzufolge ist auch die Belastung des über den Druckluftheber 8 aus dem Vorklärbecken 5 in das Prozessbecken 6 eingebrachten Rohwassers bekannt. Gleichfalls ist die für die Reinigungsschritte benötigte Sauerstoffmenge als bekannt vorauszusetzen.

Neben den vorgenannten Faktoren erfolgt mit der Bestimmung der Füllstandshöhe im Prozessbecken 6 gleichfalls eine Bestimmung der Sauerstofflöslichkeit in der in dem Prozessbecken 6 befindlichen Flüssigkeit. Die Sauerstofflöslichkeit verhält sich in einer linearen Abhängigkeit zur Wasserhöhe. Schließlich ist für die Prozessoptimierung wesentlich, welche Sauerstoffmenge in der im Prozessbecken 6 befindlichen Flüssigkeit überhaupt gelöst werden kann.

Als weiterer Korrekturfaktor hinsichtlich des möglichen Sauerstoffeintrages in die in dem Prozessbecken 6 befindliche Flüssigkeit wird vorzugsweise auch die durchschnittliche Größe der aus der Belüftermembran 16 austretenden Luftblasen verwendet. Es versteht sich, dass allein in Folge der größeren Oberfläche einer Vielzahl kleinerer Luftblasen verglichen mit einer geringeren Zahl größerer Luftblasen ein Lufteintrag mittels kleinen Blasen einen höheren Sauerstoffeintrag in die Flüssigkeit zur Folge hat. Daher wird dieses bei der Ermittlung des Sauerstoffbedarfes der Flüssigkeit in dem Prozessbecken 6 vorzugsweise mitberücksichtigt.

Die vorstehenden Ausführungen machen deutlich, dass über eine absolute Füllstandserfassung nicht nur das in dem Prozessbecken befindliche Flüssigkeitsvolumen bestimmt sondern vor allem unter Berücksichtigung der weiteren vorgenannten Faktoren die für einen Prozessschritt benötigte sowie von der Flüssigkeit aufnehmbare Sauerstoffmenge als Sauerstoffbedarfsmenge mit insbesondere für Kleinkläranlagen oder kleinen Kläranlagen hinreichender Genauigkeit ermittelt werden können. Die nachfolgende Belüftungsphase B₂ sowie gegebenenfalls weitere Belüftungsphasen mit dazwischen liegenden Belüftungspausen werden im Verhältnis von Laufzeit und Pausenzeit des Verdichters so angepasst, bis der ermittelte Sauerstoffbedarf dem Prozessbecken 6 zugeführt worden ist. Der Beginn einer Belüftungsphase beginnt definitionsgemäß bei dem dargestellten Ausführungsbeispiel nach einer ersten kurzen Anlaufzeit des Verdichters 17, bis sich in der Luftleitung 14 stabile Druckverhältnisse aufgebaut haben (vgl. Figur 2). Zum Bestimmen der während einer Belüftungsphase aktuell in das Prozessbecken 6 eingebrachten Sauerstoffmenge wird bei laufendem Verdichter 17 eine Druckmessung in der Luftleitung 14 mit dem Drucksensor 22 durchgeführt, nachdem sich in der Luftleitung 14 stabile Druckverhältnisse durch den Förderbetrieb des Verdichters 17 aufgebaut haben. Bei dem dargestellten Ausführungsbeispiel erfolgt die Druckmessung im Zeitpunkt t₄, wie in Figur 2 durch den Blockpfeil angedeutet. Diese Druckmessung erfolgt somit in Unterschied zu der zur Füllstandshöhenermittlung vorgenommenen während einer Belüftungsphase bei laufendem Verdichter 17. In diesem Zusammenhang wird darauf hingewiesen, dass unter dem Begriff des Durchführens einer Druckmessung während einer Belüftungsphase bei laufendem Verdichter ebenfalls das Durchführen einer Druckmessung zu verstehen ist, die durchgeführt wird, wenn während einer Belüftungsphase der Verdichter kurzzeitig (für die Länge der Druckmessung) ausgeschaltet wird, wobei im Zuge des kurzzeitigen Ausschaltens die in der Luftleitung vorhandenen Druckverhältnisse sich durch das Ausschalten des Verdichters nicht oder nur unwesentlich ändern. Unter Berücksichtigung der förderdruckabhängigen Leistungskurve des Verdichters 17 und gegebenenfalls weiterer Korrekturgrößen ist das aktuelle Luftfördervolumen, bezogen auf eine vorgegebene Zeiteinheit ermittelbar. Der Verdichter 17 wird mit einer konstanten Antriebsleistung betrieben. Daher ändert sich bei gleich bleibenden Prozessbedingungen im Prozessbecken 6 während einer Belüftungsphase das Fördervolumen nicht. Mit einer zu Beginn einer Belüftungsphase durchgeführten Druckmessung kann sodann in Abhängigkeit von dem Sauerstoffbedarf und dem aktuell geförderten Luftvolumen und dem darin enthaltenen Sauerstoffgehalt die zum Einbringen der benötigten Sauerstoffmenge notwendige Betriebsdauer des Verdichters 17 und somit die Länge dieser Belüftungsphase B₂ bestimmt werden. Für diese bestimmte Zeitdauer wird der Verdichter 17 in dieser Belüftungsphase B₂ betrieben.

Da vor dem Beginn einer Belüftungsphase der Sauerstoffgehalt in der im Prozessbecken 6 befindlichen Flüssigkeit sowie die mögliche von der Flüssigkeit aufzunehmende Sauerstoffmenge ermittelt worden sind, kann während des Betriebs einer nachfolgenden Belüftungsphase im Zuge des Erfassens der zugeführten Sauerstoffmenge der sich im Zuge der Belüftungsphase ändernde Sauerstoffgehalt in der Flüssigkeit des Prozessbeckens 6 ermittelt bzw. berechnet werden.

Typischerweise werden mehrere Belüftungsphasen, beispielsweise acht Belüftungsphasen im Zuge eines Reinigungsprozesses durchlaufen. Mit dem vorbeschriebenen Verfahren werden zwischen einzelnen Belüftungsphasen eintretende Füllstandshöhenänderungen durch Füllvorgänge (Beschickungen) im Prozessbecken 6 erfasst, wobei es sich hierbei typischerweise um Füllstandsänderungen handeln dürfte, die durch Nachfüllen von Rohwasser in das Prozessbecken 6 bedingt sind. Da durch die Füllstandshöhenerfassung der Sauerstoffbedarf ermittelt wird, wird der sich durch die Füllstandsänderung ändernde Sauerstoffbedarf erfasst.

Die Beschreibung der Erfindung macht deutlich, dass mit diesem eine Sauerstoffzufuhrüberwachung und eine Sauerstoffbedarfsermittlung auf mittelbare Weise unter Verwendung eines bei einer solchen Kläranlage oftmals ohnehin vorhandenen oder ohne Weiteres einzubauenden oder ohne Weiteres nachzurüstenden Sensors allein durch Vorsehen einer entsprechenden Programmierung der Steuerung der Anlage möglich ist. Versuche haben gezeigt, dass mit diesem Verfahren hinreichend genau sowohl der Sauerstoffbedarf als auch die aktuell geförderte Sauerstoffmenge ermittelbar sind, um eine Kläranlage, insbesondere eine solche, die nahezu wartungsfrei arbeiten soll, wie beispielsweise eine Kleinkläranlage oder eine kleine Kläranlage prozessoptimiert betreiben zu können.

Aus den vorstehenden Beschreibungen ergibt sich auch, dass die beschriebene Ermittlung des Sauerstoffgehaltes und/oder die beschriebene Ermittlung der Sauerstofflöslichkeit, die jeweils über die Erfassung der Füllstandshöhe der im Prozessbecken befindlichen Flüssigkeit ermittelt werden, unabhängig von den beanspruchten Verfahren eingesetzt werden können.

### Bezugszeichenliste

- 1: Kleinkläranlage
- 2: Behälter
- 3: Deckel
- 4: Trennwand
- 5: Vorklärbecken
- 6: Prozessbecken
- 7: Zulauf
- 8: Druckluftheber
- 9: Druckluftheber
- 10: Vorlagebehälter
- 11: Ablauf
- 12: Abzugspumpe
- 13: Belüftungseinrichtung
- 14: Luftleitung
- 15: Ejektor
- 16: Belüftermembran
- 17: Verdichter
- 18: Druckluftverteiler
- 19: Steuereinrichtung
- 20: Rückschlagventil
- 21: Messrohr
- 22: Drucksensor
- 23: Signalleitung
- B₁: Belüftungsphase
- B₂: Belüftungsphase

## Patentansprüche

1. Verfahren zum Zuführen von Sauerstoff in ein Belebtschlamm enthaltendes Prozessbecken (6) einer biologisch arbeitenden Kleinkläranlage (1) während eines Belüftungsvorganges, **dadurch gekennzeichnet, dass** zunächst der Sauerstoffbedarf der in dem Prozessbecken (6) enthaltenden Flüssigkeit bestimmt wird, indem die aktuelle Füllstandshöhe im Prozessbecken (6) erfasst und aus der aktuellen Füllstandshöhe der Sauerstoffbedarf abgeleitet wird, wobei zur Füllstandshöhenermittlung der in der Luftleitung (14) herrschende Druck nach Abschluss einer Luftförderperiode, wenn durch die Luftleitung (14) keine Luft dem Prozessbecken (6) zugeführt wird, gemessen wird, und nachfolgend die sich an eine solche Sauerstoffbedarfsbestimmung anschließende Belüftungsphase zum Zuführen des Sauerstoffbedarfs solange betrieben wird, bis die benötigte Sauerstoffmenge in das Prozessbecken eingebracht worden ist, wobei während einer solchen Belüftungsphase (B₂) bei laufendem Verdichter (17) der in der Luftleitung (14) herrschende Druck gemessen und unter Berücksichtigung der förderdruckabhängigen Leistungskurve des Verdichters (17) das durch diesen mit konstanter Antriebsleistung geförderte Luftvolumen sowie unter Berücksichtigung des darin enthaltenen Sauerstoffgehaltes die in das Prozessbecken (6) eingebrachte Sauerstoffmenge innerhalb dieser Belüftungsphase (B₂) bestimmt wird.

2. Verfahren nach Anspruch 1, **dadurch gekennzeichnet, dass** während einer Belüftungsphase (B₂) der in der Luftleitung (14) herrschende Druck entsprechend einem vorgegebenen Zeittakt gemessen und die Druckmesswerte zur Ermittlung von unterschiedlichen Förderdruckniveaus werteabhängig gruppiert werden.

3. Verfahren nach Anspruch 1 oder 2, **dadurch gekennzeichnet, dass** zum Bestimmen der Füllstandshöhe der in der Luftleitung (14) herrschende Luftdruck im Anschluss an eine vorangehende Belüftungsphase (B₁) gemessen wird, wobei zumindest für die Dauer der Messung des Luftdruckes der sich in der Luftleitung (14) nach Beendigung der Belüftungsphase (B₁) einstellende Luftdruck aufrechterhalten wird oder dieser Luftdruck nur in einem die Messung nicht beeinträchtigenden Maße abfällt.

4. Verfahren nach Anspruch 3, **dadurch gekennzeichnet, dass** die Belüftungsphase (B₁), in deren Anschluss die zur Füllstandserfassung durchzuführende Druckmessung in der Luftleitung (14) vorgenommen wird, durch Abschalten des Verdichters (17) beendet wird.

5. Verfahren nach Anspruch 4, **dadurch gekennzeichnet, dass** die Belüftungsphase (B₁), in deren Anschluss die zur Füllstandserfassung durchzuführende Druckmessung in der Luftleitung (14) vorgenommen wird, durch Absperren der Luftleitung (14) beendet wird, wobei die Luftleitung (14) in Förderrichtung der Luft zwischen dem Verdichter (17) und dem in die Luftleitung (14) integrierten Drucksensor (22) gesperrt wird.

6. Verfahren nach einem der Ansprüche 5 bis 7, **dadurch gekennzeichnet, dass** das gemessene Drucksignal in Bezug auf eine aus der Luftleitung (14) austretende Leckrate korrigiert wird.

7. Verfahren nach einem der Ansprüche 3 bis 6, **dadurch gekennzeichnet, dass** die Druckmessung in einem vordefinierten zeitlichen Abstand nach dem zeitlichen Ende (t₀) der vorangegangenen Belüftungsphase (B₁) durchgeführt wird.

## Claims

1. Method for delivering oxygen into a process tank (6), which contains activated sludge, of a biological small sewage works (1) during a ventilation process, **characterised in that** the oxygen demand of the liquid contained in the process tank (6) is determined first by recording the current filling level in the process tank (6) and deriving the oxygen demand from the current filling level. To determine the filling level, the pressure in the air line (14) is measured after completion of an air supply period if no air is delivered through the air line (14) to the process tank (6). Subsequently, the ventilation process following such an oxygen demand determination for delivering the oxygen demand operates until the required amount of oxygen has been introduced into the process tank. During such a ventilation process (B₂), with the compressor (17) running, the pressure in the air line (14) is measured and, taking into account the pumping pressure dependent power curve of the compressor (17), the air volume delivered by it with constant driving power and, considering the oxygen content contained therein, the amount of oxygen introduced into the process tank (6) within this ventilation process (B₂) will be determined.

2. Method according to claim 1, **characterised in that**, during a ventilation process (B₂), the pressure in the air line (14) is measured according to a specified cycle and the pressure readings for determining the different delivery pressure levels are grouped depending on values.

3. Method according to claim 1 or 2, **characterised in that**, for determining the filling level, the air pressure in the air line (14) is measured following a preceding ventilation process (B₁) with, at least for the duration of measuring the air pressure, the air pressure resulting in the air line (14) after finishing the ventilation process (B₁) being maintained or this air pressure only dropping to an extent which does not compromise the measurement.

4. Method according to claim 3, **characterised in that** the ventilation process (B₁), after which the pressure measurement for recording the filling level is performed in the air line (14), is finished by shutting down the compressor (17).

5. Method according to claim 4, **characterised in that** the ventilation process (B₁), after which the pressure measurement for recording the filling level is performed in the air line (14), is finished by shutting off the air line (14), with the air line (14) being shut off in the delivery direction of the air between the compressor (17) and the pressure sensor (22) integrated into the air line (14).

6. Method according to one of the claims 5 to 7, **characterised in that** the measured pressure signal is corrected in respect of a leakage rate exiting from the air line (14).

7. Method according to one of the claims 3 to 6, **characterised in that** the pressure measurement is performed at a predefined time interval after the finishing time (t₀) of the preceding ventilation process (B₁).

## Revendications

1. Procédé d'introduction d'oxygène dans une cuve de traitement (6), contenant des boues activées, d'une station d'épuration (1) fonctionnant par épuration biologique, au cours d'un processus d'oxygénation, **caractérisé en ce que** les besoins en oxygène du liquide contenu dans la cuve de traitement (6) sont d'abord déterminés par le fait de détecter le niveau de remplissage réel de la cuve de traitement (6) et de fixer par déduction les besoins en oxygène à partir du niveau de remplissage réel, la détermination du niveau de remplissage s'effectuant en mesurant la pression régnant dans la conduite d'air (14) à l'issue d'une période d'acheminement d'air, lorsque la conduite d'air (14) n'achemine plus d'air vers la cuve de traitement (6), et qu'ensuite, la phase d'oxygénation consécutive à une telle détermination des besoins en oxygène, visant à d'ajouter l'oxygène nécessaire, se poursuit jusqu'à ce que la quantité d'oxygène nécessaire ait été introduite dans la cuve de traitement, sachant que l'on mesure la pression présente dans la conduite d'air (14) pendant une telle phase d'oxygénation (B₂) alors que le compresseur (17) fonctionne, tout en tenant compte de la courbe de rendement du compresseur (17) dépendante de la pression d'acheminement, et que l'on détermine, pendant cette phase d'oxygénation (B₂), le volume d'air transporté à travers ce dernier à une puissance d'entraînement constante ainsi que la quantité d'oxygène introduite dans la cuve de traitement (6) en tenant compte de sa teneur en oxygène.

2. Procédé selon la revendication 1 **caractérisé en ce que**, pendant une phase d'oxygénation (B₂), la pression régnant dans la conduite d'air (14) est mesurée selon une cadence imposée et que les valeurs de pression mesurées sont regroupées en fonction de la valeur afin de définir des niveaux de pression d'acheminement différents.

3. Procédé selon la revendication 1 ou 2 **caractérisé en ce que**, pour définir le niveau de remplissage, la pression d'air régnant dans la conduite d'air (14) est mesurée à la suite d'une phase d'oxygénation (B₁) préalable, la pression d'air s'instaurant dans la conduite d'air (14) à la fin de la phase d'oxygénation (B₁) étant maintenue au moins pendant la mesure de la pression d'air ou que cette pression d'air ne chute que dans une proportion non préjudiciable à la mesure.

4. Procédé selon la revendication 3 **caractérisé en ce que** la phase d'oxygénation (B₁), à l'issue de laquelle est réalisée la mesure de pression dans la conduite d'air (14) visant à détecter le niveau de remplissage, se termine par la mise à l'arrêt du compresseur (17).

5. Procédé selon la revendication 4 **caractérisé en ce que** la phase d'oxygénation (B₁), à l'issue de laquelle est réalisée la mesure de pression dans la conduite d'air (14) visant à détecter le niveau de remplissage, se termine par la fermeture de la conduite d'air (14), laquelle conduite d'air (14) étant obturée dans le sens d'acheminement de l'air, entre le compresseur (17) et le capteur de pression (22) intégré dans la conduite d'air (14).

6. Procédé selon l'une des revendications 5 à 7 **caractérisé en ce que** le signal de pression mesuré est corrigé par rapport à un taux de fuite s'échappant de la conduite d'air (14)

7. Procédé selon l'une des revendications 3 à 6 **caractérisé en ce que** la mesure de pression est réalisée à des intervalles de temps prédéfinis, à la fin temporelle (t₀) de la phase d'oxygénation (B₁) qui précède.
